# EUROPÄISCHE PATENTSCHRIFT

(11) **EP 1 315 662 B1**
(45) Veröffentlichungstag und Bekanntmachung des Hinweises auf die Patenterteilung: **26.05.2004**
(21) Anmeldenummer: 01916906.9
(22) Anmeldetag: 06.03.2001
(51) Int. Cl.: B65G 69/18, F16L 37/30

(54) **VORRICHTUNG ZUM KUPPELN ZWEIER AUFBEWAHRUNGS- UND/ODER FÖRDERMITTEL MIT EINER SICHERUNGSEINRICHTUNG**
DEVICE FOR COUPLING TWO STORAGE AND/OR TRANSPORT MEANS WITH A SECURITY DEVICE
DISPOSITIF DE COUPLAGE DE DEUX MOYENS DE STOCKAGE ET/OU D'ACHEMINEMENT AVEC UN DISPOSITIF DE SECURITE

(30) Priorität: 28.08.2000 DE 20014871 U
(43) Veröffentlichungstag der Anmeldung: 04.06.2003
(73) Patentinhaber: GEA Buck Valve GmbH, 79379 Müllheim (DE)
(72) Erfinder: KOCH, Martin, 79395 Neuenburg (DE); ELSÄSSER, Bernd, 79282 Ballrechten-Dottingen (DE)
(74) Vertreter: Weber-Bruls, Dorothée, Dr.
(86) Internationale Anmeldenummer: PCT/DE2001/000854
(87) Internationale Veröffentlichungsnummer: WO 2002/018248

(56) Entgegenhaltungen:
- EP-A- 0 554 096
- DE-A- 4 415 488
- DE-U- 20 014 871
- US-A- 5 540 266
- US-A- 5 690 152

## Beschreibung

Die Erfindung betrifft eine Vorrichtung zum Kuppeln zweier Aufbewahrungs- und/oder Fördermittel, wie in Form von Behältnissen, Containern, Rohren und/oder dergleichen, zwecks Transfer eines Produktes von einem ersten Aufbewahrungs- und/oder Fördermittel mit einer ersten Schließklappe in einem ersten Rohrstutzen an einem ersten Ende in ein zweites Aufbewahrungs- und/oder Fördermittel mit einer zweiten Schließklappe in einem zweiten Rohrstutzen an einem zweiten Ende unter Einsatz einer Schwenkeinrichtung und einer Sicherungseinrichtung, mittels der die Schließklappen von einer Schließstellung, in der die erste Schließklappe das erste Aufbewahrungs- und/oder Fördermittel an dem ersten Ende gegenüber Atmosphäre dicht abschließt, die zweite Schließklappe das zweite Aufbewahrungs- und/oder Fördermittel an dem zweiten Ende gegenüber Atmosphäre dicht abschließt und die beiden Schließklappen und/oder die beiden Rohrstutzen relativ zueinander bewegbar sind, in eine Verriegelungsstellung, in der die beiden Schließklappen und/oder die beiden Rohrstutzen fest miteinander verbunden sind, sowie in eine Offenstellung mit fest miteinander verbundenen Schließklappen und/oder Rohrstutzen, in der zumindest eine Durchflußöffnung von dem ersten Aufbewahrungs- und/oder Fördermittel in das zweite Aufbewahrungs- und/oder Fördermittel für das Produkt offen ist, und von der Offenstellung in die Verriegelungsstellung sowie in die Schließstellung bewegbar sind.

Solch eine Vorrichtung ist, beispielsweise, aus der GB-PS 888,541 bekannt. Bei der bekannten Vorrichtung sind die Rohrstutzen relativ zueinander drehbar, wobei durch Drehen der Rohrstutzen relativ zueinander ein Bajonettverschluß verriegelt oder entriegelt und zeitgleich die Schließklappen von der Schließstellung in die Offenstellung oder von der Offenstellung in die Schließstellung gezwungen werden, so daß die Verriegelungsstellung mit der Offenstellung zusammenfällt. Solch eine Verriegelung ist insbesondere dadurch nachteilig, daß sich während des Wechsels von der Schließstellung in die Offenstellung, oder vice verca, auch wegen des Einsatzes nur eines Bajonettverschlusses, die Schließklappen unbeabsichtigterweise voneinander lösen können. Zudem ist ein Reinigen vor und/oder nach einem Produkttransfer bzw. Umfüllvorgang in der Offenstellung nicht in einer Verriegelungsstellung zwecks Vermeidung einer Kontamination, der Atmosphäre und/oder des umzufüllenden Produkts, möglich.

Ferner ist aus der DE 195 20 409 C1 eine Vorrichtung zum Kuppeln von Behältnissen mit einer Blas- und Absaugeinrichtung bekannt, die ein Reinigen der Schließklappen vor und/oder nach dem mittels der Vorrichtung zu bewerkstelligenden Umfüllvorgang ermöglicht. Dabei kommt eine Dichtung zum Einsatz, die bei einem Abstand der Schließklappen von vorzugsweise weniger als 15 mm den zwischen den Schließklappen befindlichen Raum, also die Stoßkammer, nachteiligerweise mit Ausnahme der Bereiche der Lagerschalen derselben, nach außen hin abdichtet. Ein Abdichten einer Stoßkammer gegenüber zumindest einem Teil der Schließklappen ist in der DE 299159 73 U beschrieben. Ein gegenüber der Stoßkammer abgedichteter Zwischenraum zwischen den Schließklappen stellt sicher, daß durch eine Abreinigung eventuell aufgewirbelte Stäube nicht auf besagte abgedichtete Stirnflächenbereiche gelangen können und gleichzeitig der Absaugquerschnitt für ein Reinigungsgas, Schutzgas und/oder dergleichen samt zu entfernenden Partikeln verkleinert wird, so daß der Volumenstrom zur Absaugung erhöht und ein starker Absaugleistung vorliegt.

Auch ist aus der US 5,690,152 eine Vorrichtung zur Kupplung zweier Behälter für Schüttgut bekannt, umfassend zwei Rohrstutzen, sowie eine Sicherungseinrichtung. Jeder Rohrstutzen weist eine in einer im wesentlichen kreisförmigen Dichtung gelagerte Drosselklappe auf, wobei eine Drosselklappe aktiv über einen Schwenkantrieb drehbar ist und in Anlage an der zweiten, passiven, Drosselklappe diese mitnimmt. Die Sicherungseinrichtung umfaßt zumindest einen in Bezug auf die Dichtung radial beweglichen Stift, der in der geschlossenen Drosselklappenstellung die die Drosselklappe umgebende Dichtung derart verformt, daß ein Öffnen der zumindest einen Drosselklappe verhindert wird. Zudem kann die Vorrichtung mit einer Verschlußeinrichtung ausgestattet sein, die beim Andocken der beiden Behälter aktiviert wird, so daß während eines Schüttvorganges ein Lösen der Rohrstutzen voneinander vermieden wird. Dabei soli die Sicherungs- und die Verschlußeinrichtung simultan über einen Hebel von einer Bedienperson aktiviert werden, jedoch getrennt von dem Schwenkantrieb.

Aufgabe der vorliegenden Erfindung ist es daher, die gattungsgemäße Vorrichtung derart weiterzuentwickeln, daß die Nachteile des Stands der Technik überwunden werden, insbesondere ein sicherer Verschluß der Schließklappen und/oder Rohrstutzen gegeneinander vor Öffnen der Durchflußöffnung(en) sowie nach Schließen derselben für einen Umfüllvorgang vorliegt. Auch soll ein Reinigen, insbesondere im Bereich der Lagerung der Schließklappen, verbessert werden.

Diese Aufgabe wird erfindungsgemäß gelöst durch eine einzige Betätigungseinrichtung, über die die Sicherungseinrichtung zum Wechsel von der Schließstellung in die Verriegelungsstellung, in der die beiden Aufbewahrungs- und/oder Fördermittel gegeneinander abgedichtet sind, dann die Schwenkeinrichtung zum Hereinfahren in die und anschließendem Herausfahren aus der Offenstellung und daraufhin die Sicherungseinrichtung zum Wechsel von der Verriegelungsstellung in die Schließstellung antreibbar sind.

Dabei ist bevorzugt, daß die Betätigungseinrichtung eine Getriebeeinrichtung mit einer Antriebswelle und zumindest zwei Ausgangswellen umfaßt, wobei die beiden Ausgangswellen abwechselnd von der Antriebswelle ansprechbar sind.

Weiterentwicklungen der Erfindung sind dadurch gekennzeichnet, daß die Sicherungseinrichtung einerseits mit der ersten Ausgangswelle und andererseits mit den beiden Rohrstutzen in Wirkverbindung steht, wobei die Sicherungseinrichtung vorzugsweise ein Anschlußglied zwischen dem ersten Rohrstutzen und dem zweiten Rohrstutzen umfaßt, das zum Verriegeln der beiden Rohrstutzen relativ zueinander oder Entriegeln derselben, insbesondere über zumindest einen Bajonettverschluß, um eine erste Achse drehbar ist.

Ferner wird mit der Erfindung vorgeschlagen, daß die Schwenkeinrichtung einerseits mit der zweiten Ausgangswelle und andererseits mit zumindest einer der beiden Schließklappen zum Drehen der Schließklappen um eine zweite Achse in Wirkverbindung steht, wobei die Schwenkeinrichtung vorzugsweise zwei Halbachsen umfaßt, von denen eine erste Halbachse mit der ersten Schließklappe fest verbunden ist und die zweite Halbachse mit der zweiten Schließklappe fest verbunden ist.

Bevorzugt ist erfindungsgemäß, daß zwischen der Schließstellung und der Verriegelungsstellung und/oder zwischen der Offenstellung und der Verriegelungsstellung mit zumindest teilweise fest miteinander verbundenen Schließklappen und/oder Rohrstutzen die Schließklappen zumindest bereichsweise voneinander beabstandbar sind, um in einer Reinigungsstellung einen sowohl zur Atmosphäre als auch zum Produkt geschlossenen Reinigungsraum zu begrenzen.

Mit der Erfindung wird auch vorgeschlagen, daß das Anschlußglied zumindest einen Vorsprung oder zumindest eine Ausnehmung aufweist, und jeder Vorsprung bzw. jede Ausnehmung des Anschlußgliedes mit einer Ausnehmung bzw. einem Vorsprung des ersten Rohrstutzens und/oder des zweiten Rohrstutzens in der Verriegelungsstellung fest in Eingriff steht, wobei vorzugsweise jeder Vorsprung bzw. jede Ausnehmung des Anschlußgliedes oder des/der Rohrstutzen(s) zumindest bereichsweise einen Winkel zur ersten Achse einschließt bzw. einschließen, um die Schließklappen durch Drehung des Anschlußglieds um die erste Achse voneinander weg, insbesondere zwischen der Offenstellung und der Verriegelungsstellung, bzw. aufeinander zu, insbesondere zwischen der Schließstellung und der Verriegelungsstellung, zu bewegen.

Vorteilhafterweise kann auch vorgesehen sein, daß die erste Schließklappe eine erste Stirnfläche mit zumindest einer Vertiefung und/oder Erhöhung aufweist, die zweite Schließklappe eine zu der ersten Stirnfläche komplementäre zweite Stirnfläche aufweist, und die beiden Stirnflächen zumindest in der Offenstellung dicht aneinander anliegen, wobei vorzugsweise in der Reinigungsstellung die Stirnflächen im Bereich der zumindest einen Vertiefung und/oder Erhöhung gegeneinander abgedichtet sind und der Reinigungsraum im wesentlichen ringförmig ist.

Weiterentwicklungen der Erfindung sind auch dadurch gekennzeichnet, daß die erste Schließklappe zumindest eine erste Ausnehmung auf ihrer der ersten Stirnfläche gegenüberliegenden Seite und/oder die zweite Schließklappe zumindest eine zweite Ausnehmung auf ihrer der zweiten Stirnfläche gegenüberliegenden Seite zur Vergrößerung der Durchflußöffnung bzw. Durchflußöffnungen in der Offenstellung aufweist bzw. aufweisen, wobei vorzugsweise die erste Ausnehmung und/oder die zweite Ausnehmung im wesentlichen kugelsegmentförmig ist bzw. sind.

Ferner kann bevorzugt vorgesehen sein, daß in der Offenstellung die erste Schließklappe zumindest teilweise in Eingriff mit dem zweiten Rohrstutzen und/oder die zweite Schließklappe zumindest teilweise in Eingriff mit dem ersten Rohrstutzen ist bzw. sind.

Dabei wird vorgeschlagen, daß die erste Schließklappe und/oder die zweite Schließklappe zumindest einen teilringförmigen Vorsprung, vorzugsweise zwei sich gegenüberliegende teilringförmige Vorsprünge, konzentrisch zur zweiten Achse zum Eingriff in zumindest eine teilringförmige Ausnehmung in dem ersten Rohrstutzen und/oder in dem zweiten Rohrstutzen aufweist bzw. aufweisen.

Alternativerweise kann auch vorgesehen sein, daß die erste Schließklappe und/oder die zweite Schließklappe zumindest eine teilringförmige Nut, vorzugsweise zwei sich gegenüberliegende teilringförmige Nuten, konzentrisch zur zweiten Achse zum Eingriff in zumindest eine teilringförmige Ausnehmung in dem ersten Rohrstutzen und/oder in dem zweiten Rohrstutzen aufweist bzw. aufweisen.

Ferner kann vorgesehen sein, daß die zweite Achse im wesentlichen senkrecht zur ersten Achse steht.

Weiterhin kann erfindungsgemäß vorgesehen sein, daß die erste Schließklappe Bestandteil eines passiven Ventils und die zweite Schließklappe Bestandteil eines aktiven Ventils ist, wobei vorzugsweise die zweite Halbachse fest mit der zweiten Ausgangswelle verbunden ist.

Schließlich werden erfindungsgemäß Weiterentwicklungen vorgeschlagen, die gekennzeichnet sind durch eine Reinigungseinrichtung, über die in den abgeschlossenen Reinigungsraum in der Reinigungsstellung ein fluides Reinigungsmittel einführbar und aus demselben abführbar ist.

Der Erfindung liegt somit die überraschende Erkenntnis zugrunde, daß bei Einsatz einer einzigen Betätigungseinrichtung abwechselnd, also nicht zeitgleich, eine Sicherungseinrichtung und eine Schwenkeinrichtung ansprechbar sind, so daß nach Kuppeln zweier Behältnisse beispielsweise durch Drehung einer Antriebswelle über 90° Rohrstutzen der Behältnisse über die Sicherungseinrichtung in eine Verriegelungsstellung gebracht und somit fest miteinander verriegelt werden, so daß ein Trennen derselben unmöglich wird, während Schließklappen in den Rohrstutzen für einen dichten Verschluß der Rohrstutzen, auch gegeneinander, sorgen, und anschließend durch weiteres Drehen der Antriebswelle von 90° bis 180° die Schließklappen über die Schwenkeinrichtung geöffnet werden, um einen Umfüllvorgang zu ermöglichen. Durch Zurückdrehen der Antriebswelle von 180° auf 90° werden die Schließklappen wieder geschlossen und von 90° auf 0° werden die Rohrstutzen wieder voneinander gelöst. In einem teilweise verriegelten Zustand der Rohrstutzen, um die Verriegelungsstellung herum, kann sowohl vor als auch nach einem Umfüllvorgang vorteilhafterweise erfindungsgemäß ein Bereich zwischen den Rohrstutzen und einem Teil der Stirnflächen der Schließklappen, die sogenannte Stoßkammer, die erstmals als allseits geschlossener Reinigungsraum, der sowohl zur Außenatmosphäre als auch zum Produktraum abgedichtet ist, ausgeführt und vor einem unbeabsichtigten Aufbrechen aufgrund der Verriegelung der Rohrstutzen geschützt ist, ohne die Gefahr einer Kontamination, sei es des umzufüllenden Produkts und/oder der Atmosphäre, gereinigt werden, selbst mit einer Reinigungsflüssigkeit.

Weitere Merkmale und Vorteile der Erfindung ergeben sich aus der nachfolgenden Beschreibung, in der Ausführungsbeispiele der Erfindung anhand von schematischen Zeichnungen im Einzelnen erläutert sind. Dabei zeigt:
- Figur 1: eine Querschnittsansicht durch eine erfindungsgemäße Vorrichtung, in der sich die Schließklappen in ihrer Offenstellung befinden;
- Figur 2: eine Längsschnittansicht der in Figur 1 gezeigten Vorrichtung, in der sich die Schließklappen in ihrer Reinigungsstellung befinden;
- Figur 3: eine perspektivische Ansicht einer Schließklappe, die mit einer Vorrichtung gemäß den Figuren 1 und 2 verwendbar ist; und
- Figur 4: eine Teilansicht eines Anschlußrings, der in einer Vorrichtung gemäß den Figuren 1 und 2 verwendbar ist.

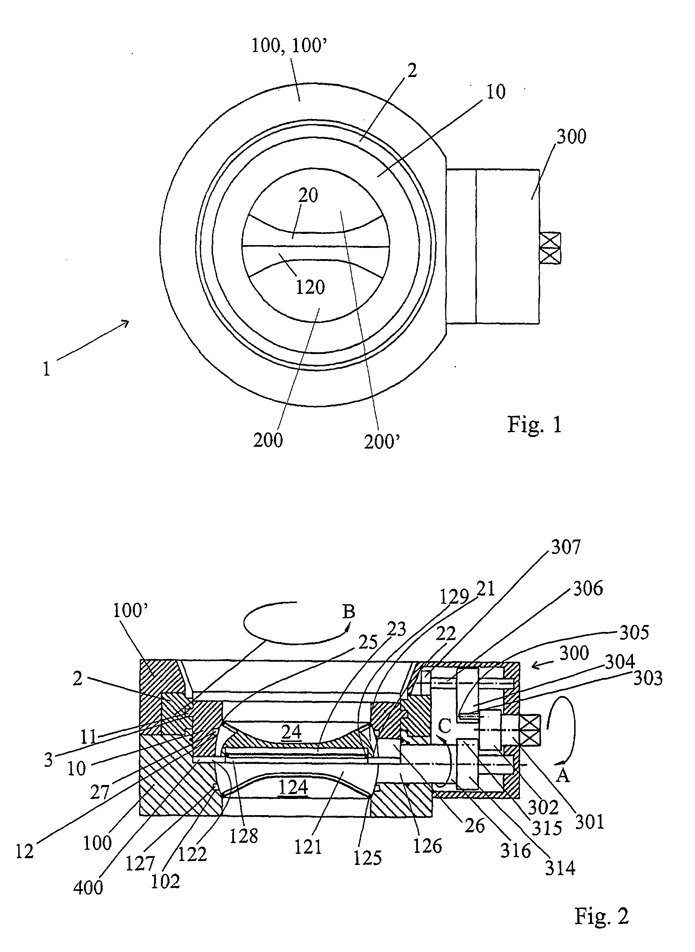

Wie Figur 1 zu entnehmen ist, umfaßt eine erfindungsgemäße Vorrichtung 1 einen ersten Rohrstutzen 10 an einem ersten, nicht gezeigten Behältnis, der, sobald das erste Behältnis mit einem zweiten, nicht gezeigten Behältnis gekuppelt ist, unter Zwischenschaltung eines Anschlußglieds bzw. Anschlußrings 2 in einem zweiten, zweiteilig ausgeführten Rohrstutzen 100, 100' des zweiten Behältnisses gelagert ist. In den beiden Rohrstutzen 10, 100, 100' sind wiederum zwei Ventile 20, 120 gelagert, wobei das erste Ventil 20 passiv und das zweite Ventil 120 aktiv sein kann, so daß lediglich das aktive Ventil 120 zur Öffnung bzw. Schließung von Durchflußöffnungen 200, 200' von dem ersten Behältnis zu dem zweiten Behältnis unter Einsatz einer Getriebeeinrichtung 300 aktiv betätigbar ist.

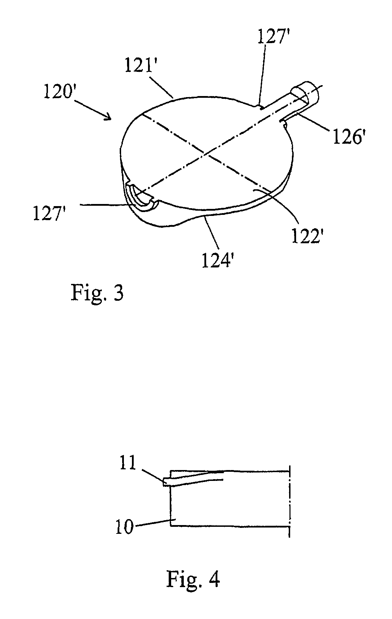

In der in Figur 2 gezeigten Reinigungsstellung umgreift der zweite Rohrstutzen 100, 100' den Anschlußring 2, der wiederum den ersten Rohrstutzen 10 angreift, so daß sich die Rohrstutzen 10, 100, 100' nicht relativ zueinander bewegen können. Zu diesem Zweck ist der Anschlußring 2 mit zwei sich gegenüberliegenden und längs des Innenumfangs erstreckenden Ausnehmungen 3 versehen, in die jeweils ein Vorsprung 11 des ersten Rohrstutzens 10 eingreifen kann, wobei sich jeder Vorsprung 11 längs des Außenumfangs des ersten Rohrstutzens 10 zumindest teilweise in gebogener Form erstreckt, wie in Figur 4 dargestellt.

Der erste Rohrstutzen 10 weist zudem zwei sich gegenüberliegende Ausnehmungen 12 auf, in die das passive Ventil 20 in der Verriegelungsstellung gemäß Figur 2 eingreift. Das passive Ventil 20 seinerseits umfaßt eine Schließklappe 21 mit einer Stirnfläche 22, in der eine Vertiefung 23 ausgeformt ist, und einer kugelsegmentförmigen Ausnehmung 24 auf der der Stirnfläche 22 gegenüberliegenden Seite. Ferner ist das passive Ventil 20 gegenüber dem ersten Rohrstutzen 10 mittels einer Schließklappendichtung 25 abgedichtet und mit einer Halbachse 26 fest verbunden. Schließlich umfaßt das passive Ventil 20 auch zwei Vorsprünge 27 zum Eingriff in die Ausnehmungen 12.

In analoger Weise ist das aktive Ventil 120 in dem zweiten Rohrstutzen 100 durch Eingriff in zwei sich gegenüberliegende Ausnehmungen 102 gelagert. Das aktive Ventil 120 umfaßt seinerseits eine Schließklappe 121 mit einer Stirnfläche 122, von der sich ein Vorsprung 127 abhebt, und einer kugelsegmentförmigen Ausnehmung 124 auf der der Stirnfläche 122 gegenüberliegenden Seite. Auch das aktive Ventil 120 ist gegenüber dem zweiten Rohrstutzen 100 unter Einsatz einer Schließklappendichtung 125 abgedichtet. Die Schließklappe 121 des aktiven Ventils 120 ist fest mit einer zweiten Halbachse 126 ausgebildet. Ferner werden Vorsprünge 127 zum Eingriff in die Ausnehmungen 102 gemäß Figur 2 vom aktiven Ventil 120 bereitgestellt. Zudem ist zwischen den beiden Schließklappen 21, 121 im Bereich der Vertiefung 23, in die die Erhebung 128 gemäß Figur 2 zum Teil eingreift, eine weitere Schließklappendichtung 129 vorgesehen.

Ein alternatives aktives Ventil 120' ist in Figur 3 dargestellt. Das aktive Ventil 120' umfaßt dabei eine Schließklappe 121' mit einer ebenen Stirnfläche 122' und einer kugelsegmentförmigen Ausnehmung 124' auf ihrer der Stirnfläche 122' gegenüberliegenden Seite. Ferner ist die Schließklappe 121' einseitig mit einer Halbachse 126' versehen, konzentrisch zu deren Längsachse zwei halbkreisförmige Vorsprünge 127 verlaufen.

Die Getriebeeinrichtung 300 umfaßt gemäß Figur 2 eine Antriebswelle 301 mit einer Scheibe 302 und einem Stöpsel 303, der abwechselnd an eine Scheibe 304 mit einer Ausnehmung 305 zum Antreiben einer ersten Ausgangswelle 306 oder an eine Scheibe 314 mit einer Ausnehmung 315 zum Antreiben einer zweiten Ausgangswelle 316 angreift. Die erste Ausgangswelle 306 ist ferner mit einer Scheibe 307 verbunden, die an den Anschlußring 2 zum Drehen desselben angreift, während die zweite Ausgangswelle 316 in die erste Halbachse 126 zum Betätigen des aktiven Ventils 120 übergeht.

In der in Figur 2 dargestellten Reinigungsstellung ist schließlich noch ein allseits geschlossener Reinigungsraum 400 zwischen den Rohrstutzen 10, 100 sowie den Schließklappen 21, 121 vorgesehen.

Die in ihrem Aufbau mit Bezug auf die Figuren soeben beschriebene Vorrichtung arbeitet beispielsweise wie folgt:

Zuerst wird der erste Rohrstutzen 10 samt dem passiven Ventil 20 in den zweiten Rohrstutzen 100, 100' sowie den Anschlußring 2 eingeschoben, bis der erste Rohrstutzen 10 auf dem zweiten Rohrstutzen 100 in der Schließstellung zu liegen kommt.

Wird nun die Antriebswelle 301 in Richtung des Pfeils A in Figur 2 gedreht, so hakt sich der Stöpsel 303 in die Ausnehmung 305 in der Scheibe 304 ein, um besagte Drehbewegung auf die erste Ausgangswelle 306 zu übertragen. Die erste Ausgangswelle 306 erzwingt dann unter Einsatz der Scheibe 307 eine Drehung des Anschlußringes 2 in Richtung des Pfeils B in Figur 2, so daß die Vorsprünge 11 des ersten Rohrstutzens 10 in die entsprechenden Ausnehmungen 3 des Anschlußrings 2 eingreifen, was zu einer Verriegelung der Rohrstutzen 10, 100 100' nach Art eines Bajonettverschlusses führt. Aufgrund der Krümmung der Vorsprünge 11 des ersten Rohrstutzens 10 kommt es bei der Drehung des Anschlußrings 2 in Richtung des Pfeils B gleichzeitig zu einem Absenken des ersten Rohrstutzens 10 auf den zweiten Rohrstutzen 100 zu, so daß der Reinigungsraum 400 entsteht, der sowohl gegenüber Atmosphäre als auch gegenüber dem durch die Schließklappendichtung 129 abgedichteten Bereich zwischen den Stirnflächen 22, 122 in der Reinigungsstellung abgedichtet ist, wie in Figur 2 dargestellt. Der Reinigungsraum 400 kann dann mit einem Reinigungsgas oder einer Reinigungsflüssigkeit durchflutet werden, um vor einem Umfüllvorgang, ohne Verschmutzung der abgedichteten Stirnflächenbereiche, Restkontaminationen zu entfernen. Nach besagtem Reinigen wird dann die Antriebswelle 301 weiter gedreht, unter gleichzeitigem weiteren Verriegeln und weiteren Absenken des ersten Rohrstutzens 10 relativ zu dem zweiten Rohrstutzen 100, und zwar so lange, bis die Stirnflächen 22, 122 der Schließklappen 21, 121 in der Verriegelungsstellung dicht aufeinander liegen.

Eine weitere Drehung der Antriebswelle 301 bewirkt, daß sich der Stöpsel 303 aus der Ausnehmung 305 löst und in die Ausnehmung 315 der Scheibe 314 einhakt, so daß dann eine weitere Drehbewegung in Richtung des Pfeils A auf die zweite Ausgangswelle 316 übertragen wird. Bei der weiteren Drehung der Antriebswelle 301 kommt es zu einem Drehen der Ventile 20, 120 in die in Figur 1 dargestellte Offenstellung, wobei gleichzeitig die Vorsprünge 27 an der ersten Schließklappe 21 in die Ausnehmungen 102 des zweiten Rohrstutzens 100 und die Vorsprünge 127 an der zweiten Schließklappe 121 in die Ausnehmungen 12 des ersten Rohrstutzens 10 eingreifen, was zu einer Verriegelung der Ventile 20, 120 mit den Rohrstutzen 10, 100, 100' führt, die es unmöglich macht, die Ventile 20, 120 in der Offenstellung voneinander zu trennen. In der Offenstellung kann durch die Durchflußöffnungen 200, 200' ein nicht gezeigtes Produkt von dem ersten Behälter in den zweiten Behälter fließen.

Nach Beendigung der Produktumfüllung kann dann die Antriebswelle 301 in ihre Ausgangsstellung, also entgegen der Drehrichtung A in Figur 2, zurückgedreht werden, wobei hier wieder über Drehung der zweiten Ausgangswelle 316 die Schließklappen 21, 121 in ihre jeweiligen Rohrstutzen 10, 100 zum Abdichten der Behälter gegeneinander bis in die Verriegelungsstellung gedreht werden. Sodann wechselt der Stöpsel 303 wieder von der Ausnehmung 315 in die Ausnehmung 305, um über die erste Ausgangswelle 306 den Anschlußring 2 bis in die Reinigungsstellung zu drehen, in der dann ein erneutes Reinigen des Reinigungsraumes 400 möglich ist. Beim Erreichen der Ausgangsposition der Antriebswelle 301 ist dann die Verriegelung durch Lösung der Verbindung zwischen den Vorsprüngen 11 und den Ausnehmungen 3 aufgehoben, so daß dann die beiden Behältnisse wieder voneinander getrennt werden können.

Zusammenfassend ist somit festzuhalten, daß sich mit der erfindungsgemäßen Vorrichtung durch Betätigen lediglich der Antriebswelle 301 nacheinander folgende Stadien durchlaufen lassen:
1. Verriegeln der Rohrstutzen 10, 100, 100' relativ zueinander unter gleichzeitigem Abdichten des Reinigungsraums 400;
2. Reinigen des Reinigungsraums 400 in der Reinigungsstellung;
3. Schließen des Reinigungsraums 400 bei Erreichen der Verriegelungsstellung,
4. Öffnen der Durchflußöffnungen 200, 200' unter gleichzeitiger Verriegelung der Schließklappen 21, 121 mit den Rohrstutzen 10, 100;
5. Umfüllen eines Produktes von dem ersten Behälter in den zweiten Behälter,
6. Schließen der Durchflußöffnungen 200, 200' unter gleichzeitiger Lösung der Verriegelung zwischen den Schließklappen 21, 121 und den Rohrstutzen 10, 100;
7. Öffnen des Reinigungsraums 400 in der teilverriegelten Reinigungsstellung;
8. Reinigen des Reinigungsraums 400; und
9. Vollständiges Öffnen des Reinigungsraums unter gleichzeitigem Lösen der Verriegelung zwischen den Rohrstutzen 10, 100, 100'.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung (1) zum Kuppeln zweier Aufbewahrungs- und/oder Fördermittel, wie in Form von Behältnissen, Containern, Rohren und/oder dergleichen, zwecks Transfer eines Produktes von einem ersten Aufbewahrungs- und/oder Fördermittel mit einer ersten Schließklappe (21) in einem ersten Rohrstutzen (10) an einem ersten Ende in ein zweites Aufbewahrungs- und/oder Fördermittel mit einer zweiten Schließklappe (121, 121') in einem zweiten Rohrstutzen (100, 100') an einem zweiten Ende unter Einsatz einer Schwenkeinrichtung (26, 126, 126') und einer Sicherungseinrichtung (2, 3, 11), mittels der die Schließklappen von einer Schließstellung, in der die erste Schließklappe das erste Aufbewahrungs- und/oder Fördermittel an dem ersten Ende gegenüber Atmosphäre dicht abschließt, die zweite Schließklappe (121, 121') das zweite Aufbewahrungs- und/oder Fördennittel an dem zweiten Ende gegenüber Atmosphäre dicht abschließt und die beiden Schließklappen (21, 121, 121') und/oder die beiden Rohrstutzen (10, 100, 100') relativ zueinander bewegbar sind, in eine Verriegelungsstellung, in der die beiden Schließklappen (21, 121, 121') und/oder die beiden Rohrstutzen (10, 100, 100') fest miteinander verbunden sind, sowie in eine Offenstellung mit fest miteinander verbundenen Schließklappen (21, 121, 121') und/oder Rohrstutzen (10, 100, 100'), in der zumindest eine Durchflußöffnung (200, 200') von dem ersten Aufbewahrungs- und/oder Fördermittel in das zweite Aufbewahrungsund/oder Fördermittel für das Produkt offen ist, und von der Offenstellung in die Verriegelungsstellung sowie in die Schließstellung bewegbar sind, **gekennzeichnet durch** eine einzige Betätigungseinrichtung (300, 301, 302, 303, 304, 305, 306, 307, 314, 315, 316), über die die Sicherungseinrichtung (2, 3, 11) zum Wechsel von der Schließstellung in die Verriegelungsstellung, in der die beiden Aufbewahrungs- und/oder Fördermittel gegeneinander abgedichtet sind, dann die Schwenkeinrichtung (26, 126, 126') zum Hereinfahren in die und anschließendem Herausfahren aus der Offenstellung und daraufhin die Sicherungseinrichtung (2, 3, 11) zum Wechsel von der Verriegelungsstellung in die Schließstellung antreibbar sind.

2. Vorrichtung nach Anspruch 1, **dadurch gekennzeichnet, daß**
die Betätigungseinrichtung eine Getriebeeinrichtung (300, 301, 302, 303, 304, 305, 306, 307, 314, 315, 316) mit einer Antriebswelle (301) und zumindest zwei Ausgangswellen (306, 316) umfaßt, wobei die beiden Ausgangswellen (306, 316) abwechselnd von der Antriebswelle (301) ansprechbar sind.

3. Vorrichtung nach Anspruch 2, **dadurch gekennzeichnet, daß**
die Sicherungseinrichtung (2, 3, 11) einerseits mit der ersten Ausgangswelle (306) und andererseits mit den beiden Rohrstutzen (10, 100, 100') in Wirkverbindung steht, wobei die Sicherungseinrichtung (2, 3, 11) vorzugsweise ein Anschlußglied (2) zwischen dem ersten Rohrstutzen (10) und dem zweiten Rohrstutzen (100, 100') umfaßt, das zum Verriegeln der beiden Rohrstutzen (10, 100, 100') relativ zueinander oder Entriegeln derselben, insbesondere über zumindest einen Bajonettverschluß (3, 11), um eine erste Achse drehbar ist.

4. Vorrichtung nach Anspruch 2 oder 3, **dadurch gekennzeichnet, daß**
die Schwenkeinrichtung (26, 126, 126') einerseits mit der zweiten Ausgangswelle (316) und andererseits mit zumindest einer der beiden Schließklappen (21, 121, 121') zum Drehen der Schließklappen (21, 121, 121') um eine zweite Achse in Wirkverbindung steht, wobei die Schwenkeinrichtung vorzugsweise zwei Halbachsen (26, 126, 126') umfaßt, von denen eine erste Halbachse (26) mit der ersten Schließklappe (21) fest verbunden ist und die zweite Halbachse (126, 126') mit der zweiten Schließklappe (121, 121') fest verbunden ist.

5. Vorrichtung nach einem der vorangehenden Ansprüche, **dadurch gekennzeichnet, daß** zwischen der Schließstellung und der Verriegelungsstellung und/oder zwischen der Offenstellung und der Verriegelungsstellung mit zumindest teilweise fest miteinander verbundenen Schließklappen (21, 121, 121') und/oder Rohrstutzen (10, 100, 100') die Schließklappen (21, 121, 121') zumindest bereichsweise voneinander beabstandbar sind, um in einer Reinigungsstellung einen sowohl zur Atmosphäre als auch zum Produkt geschlossenen Reinigungsraum (400) zu begrenzen.

6. Vorrichtung nach einem der Ansprüche 3 bis 5, **dadurch gekennzeichnet, daß**
das Anschlußglied (2) zumindest einen Vorsprung oder zumindest eine Ausnehmung (3) aufweist, und jeder Vorsprung bzw. jede Ausnehmung (3) des Anschlußgliedes (2) mit einer Ausnehmung bzw. einem Vorsprung (11) des ersten Rohrstutzens (10) und/oder des zweiten Rohrstutzen (100, 100') in der Verriegelungsstellung fest in Eingriff steht, wobei vorzugsweise jeder Vorsprung (11) bzw. jede Ausnehmung des Anschlußgliedes (2) oder des/der Rohrstutzen(s) (100, 100') zumindest bereichsweise einen Winkel zur ersten Achse einschließt bzw. einschließen, um die Schließklappen (21, 121, 121') durch Drehung des Anschlußglieds (2) um die erste Achse voneinander weg, insbesondere zwischen der Offenstellung und der Verriegelungsstellung, bzw. aufeinander zu, insbesondere zwischen der Schließstellung und der Verriegelungsstellung, zu bewegen.

7. Vorrichtung nach einem der vorangehenden Ansprüche, **dadurch gekennzeichnet, daß** die erste Schließklappe (21) eine erste Stirnfläche (22) mit zumindest einer Vertiefung (23) und/oder Erhöhung aufweist, die zweite Schließklappe (121) eine zu der ersten Stirnfläche (22) komplementäre zweite Stirnfläche (122) aufweist, und die beiden Stirnflächen (21, 121) zumindest in der Offenstellung dicht aneinander anliegen, wobei vorzugsweise in der Reinigungsstellung die Stirnflächen (22, 122') im Bereich der zumindest einen Vertiefung (23) und/oder Erhöhung gegeneinander abgedichtet sind und der Reinigungsraum (400) im wesentlichen ringförmig ist.

8. Vorrichtung nach einem der vorangehenden Ansprüche, **dadurch gekennzeichnet, daß** die erste Schließklappe (21) zumindest eine erste Ausnehmung (24) auf ihrer der ersten Stirnfläche (22) gegenüberliegenden Seite und/oder die zweite Schließklappe (121, 121') zumindest eine zweite Ausnehmung (124, 124') auf ihrer der zweiten Stirnfläche (122, 122') gegenüberliegenden Seite zur Vergrößerung der Durchflußöffnung bzw. Durchflußöffnungen (200, 200') in der Offenstellung aufweist bzw. aufweisen, wobei vorzugsweise die erste Ausnehmung (24) und/oder die zweite Ausnehmung (124, 124') im wesentlichen kugelsegmentförmig ist bzw. sind.

9. Vorrichtung nach einem der vorangehenden Ansprüche, **dadurch gekennzeichnet, daß** in der Offenstellung die erste Schließklappe (21) zumindest teilweise in Eingriff mit dem zweiten Rohrstutzen (100) und/oder die zweite Schließklappe (121, 121') zumindest teilweise in Eingriff mit dem ersten Rohrstutzen (10) ist bzw. sind.

10. Vorrichtung nach Anspruch 9, **dadurch gekennzeichnet, daß**
die erste Schließklappe (21) und/oder die zweite Schließklappe (121, 121') zumindest einen teilringförmigen Vorsprung (27, 127, 127') , vorzugsweise zwei sich gegenüberliegende teilringförmige Vorsprünge, konzentrisch zur zweiten Achse zum Eingriff in zumindest eine teilringförmige Ausnehmung (12, 102) in dem ersten Rohrstutzen (10) und/oder in dem zweiten Rohrstutzen (100) aufweist bzw. aufweisen.

11. Vorrichtung nach Anspruch 9, **dadurch gekennzeichnet, daß**
die erste Schließklappe (21) und/oder die zweite Schließklappe (121, 121') zumindest eine teilringförmige Nut, vorzugsweise zwei sich gegenüberliegende teilringförmige Nuten, konzentrisch zur zweiten Achse zum Eingriff in zumindest eine teilringförmige Ausnehmung in dem ersten Rohrstutzen und/oder in dem zweiten Rohrstutzen aufweist bzw. aufweisen.

12. Vorrichtung nach einem der Ansprüche 4 bis 11, **dadurch gekennzeichnet, daß**
die zweite Achse im wesentlichen senkrecht zur ersten Achse steht.

13. Vorrichtung nach einem der vorangehenden Ansprüche, **dadurch gekennzeichnet, daß**
die erste Schließklappe (21) Bestandteil eines passiven Ventils (20) und die zweite Schließklappe (121, 121') Bestandteil eines aktiven Ventils (120) ist, wobei vorzugsweise die zweite Halbachse (126) fest mit der zweiten Ausgangswelle (316) verbunden ist.

14. Vorrichtung nach einem der Ansprüche 5 bis 13, **gekennzeichnet durch**
eine Reinigungseinrichtung, über die in den abgeschlossenen Reinigungsraum (400) in der Reinigungsstellung ein fluides Reinigungsmittel einführbar und aus demselben abführbar ist.

## Claims

1. A device (1) for coupling two storage and/or transport means, for example in the form of receptacles, containers, pipes and/or the like, for the transfer of a product from a first storage and/or transport means with a first closure flap (21) in a first spigot (10) at a first end into a second storage and/or transport means with a second closure flap (121, 121') in a second spigot (100, 100') at a second end with the use of a pivoting device (26, 126, 126') and a securing device (2, 3, 11) by means of which the closure flaps are movable from a closure position in which the first closure flap sealingly shuts off from atmosphere the first storage and/or transport means at the first end, the second closure flap (121, 121') sealingly shuts off from atmosphere the second storage and/or transport means at the second end and the two closure flaps (21, 121, 121') and/or the two spigots (10, 100, 100') are movable relatively to one another, into a locking position in which the two closure flaps (21, 121, 121') and/or the two spigots (10, 100, 100') are rigidly interconnected, and into an open position with rigidly interconnected closure flaps (21, 121, 121') and/or spigots (10, 100, 100'), in which at least one flowthrough opening (200, 200') is open from the first storage and/or transport means into the second storage and/or transport means for the product, and from the open position into the locking position and into the closure position, **characterised by** a single actuating device (300, 301, 302, 303, 304, 305, 306, 307, 314, 315, 316), by means of which the securing device (2, 3, 11) is drivable to change from the closure position to the locking position, in which the two storage and/or transport means are sealed off from one another, and then the pivoting device (26, 126, 126') is drivable for moving into and subsequently moving out of the open position and then the securing device (2, 3, 11) is drivable to change from the locking position to the closure position.

2. A device according to claim 1, **characterised in that** the actuating device comprises a gear mechanism (300, 301, 302, 303, 304, 305, 306, 307, 314, 315, 316) with a drive shaft (301) and at least two output shafts (306, 316), the two output shafts (306, 316) being adapted to respond alternately from the drive shaft (301).

3. A device according to claim 2, **characterised in that** the securing device (2, 3, 11) is operatively connected on the one hand to the first output shaft (306) and on the other hand to the two spigots (10, 100, 100'), the securing device (2, 3, 11) preferably comprising a connection member (2) between the first spigot (10) and the second spigot (100, 100'), which member is rotatable about a first axis to lock the two spigots (10, 100, 100') relatively to one another or unlock the same, particularly via at least one bayonet lock (3, 11).

4. A device according to claim 2 or 3, **characterised in that** the pivoting device (26, 126, 126') is operatively connected on the one hand to the second output shaft (316) and on the other hand to at least one of the two closure flaps (21, 121, 121') to rotate the closure flaps (21, 121, 121') about a second axis, the pivoting device preferably comprising two half shafts (26, 126, 126'), of which a first half shaft (26) is rigidly connected to the first closure flap (21) and the second half shaft (126, 126') is rigidly connected to the second closure flap (121, 121').

5. A device according to any one of the preceding claims, **characterised in that** between the closure position and the locking position and/or between the open position and the locking position with the closure flaps (21, 121, 121') and/or spigots (10, 100, 100') at least partially rigidly interconnected, the closure flaps (21, 121, 121') are adapted to be spaced from one another at least in certain regions in order to define in a cleaning position a cleaning chamber (400) which is closed both from atmosphere and from the product.

6. A device according to any one of claims 3 to 5, **characterised in that** the connection member (2) comprises at least one projection or at least one recess (3) and each projection or each recess (3) of the connection member (2) rigidly engages a recess or a projection (11) on the first spigot (10) and/or the second spigot (100, 100') in the locking position, while preferably each projection (11) or each recess of the connection member (2) or of the spigot or spigots (100, 100') include, at least in certain zones, an angle to the first axis in order to move the closure flaps (21, 121, 121') apart from one another by rotation of the connection member (2) about the first axis, particularly between the open position and the locking position, or towards one another, particularly between the closure position and the locking position.

7. A device according to any one of the preceding claims, **characterised in that** the first closure flap (21) comprises a first end face (22) with at least one recess (23) and/or elevation, the second closure flap (121) comprises a second end face (122) complementary to the first end face (22), and the two end faces (21, 121) bear sealingly against one another at least in the open position, while preferably in the cleaning position the end faces (22, 122') are sealed off from one another in the region of the at least one recess (23) and/or elevation and the cleaning chamber (400) is substantially annular.

8. A device according to any one of the preceding claims, **characterised in that** the first closure flap (21) comprises at least one first recess (24) on its side opposite the first end face (22) and/or the second closure flap (121, 121') comprise(s) at least a second recess (124,124') on its side opposite the second end face (122, 122'), to increase the flowthrough opening or flowthrough openings (200, 200') in the open position, while preferably the first recess (24) and/or the second recess (124, 124') is/are substantially in the form of a spherical segment.

9. A device according to any one of the preceding claims, **characterised in that** in the open position the first closure flap (21) is at least partially in engagement with the second spigot (100) and/or the second closure flap (121, 121') is/are at least partially in engagement with the first spigot (10).

10. A device according to claim 9, **characterised in that** the first closure flap (21) and/or the second closure flap (121, 121') comprise(s) at least one partially annular projection (27, 127, 127'), preferably two opposite partially annular projections, concentric to the second axis for engagement in at least one partially annular recess (12, 102) in the first spigot (10) and/or in the second spigot (100).

11. A device according to claim 9, **characterised in that** the first closure flap (21) and/or the second closure flap (121, 121') comprise(s) at least one partially annular groove, preferably two opposite partially annular grooves, concentric to the second axis, for engagement in at least one partially annular recess in the first spigot and/or in the second spigot.

12. A device according to any one of claims 4 to 11, **characterised in that** the second axis is substantially perpendicular to the first axis.

13. A device according to any one of the preceding claims, **characterised in that** the first closure flap (21) forms part of a passive valve (20) and the second closure flap (121, 121') forms part of an active valve (120), while preferably the second half shaft (126) is rigidly connected to the second output shaft (316).

14. A device according to any one of claims 5 to 13, **characterised by** a cleaning device by means of which a fluid cleaning agent can be introduced into and removed from the closed cleaning chamber (400) in the cleaning position.

## Revendications

1. Dispositif (1) de couplage de deux moyens de stockage et/ou d'acheminement, tel que se présentant sous la forme de contenants, conteneurs, tubes et/ou analogues, dans le but de transférer un produit d'un premier moyen de stockage et/ou d'acheminement, muni d'un premier clapet de fermeture (21), monté dans une première tubulure (10), à une première extrémité, dans un deuxième moyen de stockage et/ou d'acheminement muni d'un deuxième clapet de fermeture (121, 121'), monté dans une deuxième tubulure (100, 100'), sur une deuxième extrémité, avec utilisation d'un dispositif de pivotement (26, 126, 126') et d'un dispositif de sécurité (2, 3, 11), au moyen desquels les clapets de fermeture sont déplaçables, d'une position de fermeture, à laquelle le premier clapet de fermeture ferme de façon étanche par rapport à l'atmosphère le premier moyen de stockage et/ou d'acheminement, monté sur la première extrémité, le deuxième clapet de fermeture (121, 121') ferme de façon étanche par rapport à l'atmosphère le deuxième moyen de stockage et/ou d'acheminement, monté sur la deuxième extrémité, et les deux clapets de fermeture (21, 121, 121') et/ou les deux tubulures (10, 100, 100') étant déplaçables l'un par rapport à l'autre, pour passer en une position de verrouillage, à laquelle les deux clapets de fermeture (21, 121, 121') et/ou les deux tubulures (10, 100, 100') sont reliés rigidement ensemble, ainsi qu'en une position d'ouverture à laquelle, les clapets de fermeture (21, 121, 121') et/ou les tubulures (10, 100, 100') étant reliés rigidement entre eux, au moins une ouverture de passage d'écoulement (200, 200') du premier moyen de stockage et/ou d'acheminement au deuxième moyen de stockage et/ou d'acheminement, pour le produit, est ouverte et les clapets de fermeture étant déplaçables de la position d'ouverture à la position de verrouillage, ainsi qu'à la position de fermeture, **caractérisé par** un dispositif d'actionnement (300, 301, 302, 303, 304, 305, 306, 307, 314, 315, 316) unique, par l'intermédiaire duquel le dispositif de sécurité (2, 3, 11) est susceptible d'être entraîné, pour effectuer le passage de la position de fermeture à la position de verrouillage, à laquelle les deux moyens de stockage et/ou d'acheminement sont isolés hermétiquement l'un par rapport à l'autre, puis le dispositif de pivotement (26, 126, 126') est susceptible d'être entraîné, pour effectuer l'approche à la position d'ouverture, puis l'abandon de cette position d'ouverture et, suite à cela, le dispositif de sécurité (2, 3, 11) est susceptible d'être entraîné, pour effectuer le passage de la position de verrouillage à la position de fermeture.

2. Dispositif selon la revendication 1, **caractérisé en ce que** le dispositif d'actionnement comprend un dispositif de transmission (300, 301, 302, 303, 304, 305, 307, 314, 315, 316) avec un arbre d'entraînement (301) et au moins deux arbres de sortie (306, 316), les deux arbres de sortie (306, 316) pouvant fonctionner de façon alternée sous l'action de l'arbre d'entraînement (301).

3. Dispositif selon la revendication 2, **caractérisé en ce que** le dispositif de sécurité (2, 3, 11), d'une part, est relié fonctionnellement au premier arbre de sortie (306) et, d'autre part, aux deux tubulures (10, 100, 100'), le dispositif de sécurité (2, 3, 11), de préférence, comprenant, entre la première tubulure (10) et la deuxième tubulure (100, 100'), un organe de raccordement (2) susceptible de tourner autour d'un premier axe, pour produire le verrouillage des deux tubulures (10, 100, 100') l'une par rapport à l'autre ou bien de déverrouillage de celles-ci, en particulier, par l'intermédiaire d'au moins une fermeture à baïonnette (3, 11).

4. Dispositif selon la revendication 2 ou 3, **caractérisé en ce que** le dispositif de pivotement (26, 126, 126') est relié fonctionnellement, d'une part, au deuxième arbre de sortie (316) et, d'autre part, à au moins l'un des deux clapets de fermeture (21, 121, 121') pour assurer la rotation des clapets de fermeture (21, 121, 121') autour d'un deuxième axe, le dispositif de pivotement comprenant, de préférence, deux demi-axes (26, 126, 126'), dont un premier demi-axe (26) est relié rigidement au premier clapet de fermeture (21) et le deuxième demi-axe (126, 126') est relié rigidement au deuxième clapet de fermeture (121, 121').

5. Dispositif selon l'une des revendications précédentes, **caractérisé en ce que**, entre la position de fermeture et la position de verrouillage et/ou entre la position d'ouverture et la position de verrouillage, avec les clapets de fermeture (21, 121, 121') et/ou les tubulures (10, 100, 100') reliés entre eux au moins partiellement rigidement, les clapets de fermeture (21, 121, 121') peuvent être espacés l'un de l'autre au moins par zones pour, en une position de nettoyage, délimiter une enceinte de nettoyage (400), fermée tant vers l'atmosphère, qu'également vis-à-vis du produit.

6. Dispositif selon l'une des revendications 3 à 5, **caractérisé en ce que** l'organe de raccordement (2) présente au moins une saillie ou au moins un évidement (3), et chaque saillie, ou chaque évidement (3), de l'organe de raccordement (2) est mis(e) en prise rigidement à la position de verrouillage, avec un évidement, respectivement une saillie (11) de la première tubulure (10) et/ou de la deuxième tubulure (100, 100'), sachant que, de préférence, chaque saille (11) et/ou chaque évidement de l'organe de raccordement (2) ou de la/des tubulure(s) (10, 100') fait/font, au moins par zone, un angle par rapport au premier axe, pour mouvoir les clapets de fermeture (21, 121, 121'), par une rotation de l'organe de raccordement (2) autour du premier axe, en les écartant l'un de l'autre, en particulier entre la position d'ouverture et la position de verrouillage, respectivement en les rapprochant l'un de l'autre, en particulier entre la position de fermeture et la position de verrouillage.

7. Dispositif selon l'une des revendications précédentes, **caractérisé en ce que** le premier clapet de fermeture (21) présente une première face frontale (22) avec au moins un creusement (23) et/ou un bossage, que le deuxième clapet de fermeture (121) présente une deuxième face frontale (122), complémentaire de la première face frontale (22), et les deux faces frontales (21, 121) sont en appui mutuel, étanche, au moins à la position d'ouverture, sachant que, de préférence, à la position de nettoyage, les faces frontales (22, 122') sont isolées hermétiquement, mutuellement, dans la zone du au moins un creusement (23) et/ou du au moins un bossage, et l'enceinte de nettoyage (400) est sensiblement en forme d'anneau.

8. Dispositif selon l'une des revendications précédentes, **caractérisé en ce que** le premier clapet de fermeture (21) présente au moins un premier évidement (24) sur sa face opposée à la première face frontale (22) et/ou le deuxième clapet de fermeture (121, 121') présente au moins un deuxième évidement (124, 124') sur sa face opposée à la deuxième face frontale (122, 122'), dans le but d'agrandir l'ouverture de passage d'écoulement, respectivement les ouvertures de passage d'écoulement (200, 200') à la position d'ouverture, sachant que, de préférence, le premier évidement (24) et/ou le deuxième évidement (124, 124') est/sont sensiblement en forme de segment sphérique.

9. Dispositif selon l'une des revendications précédentes, **caractérisé en ce que**, à la position d'ouverture, le premier clapet de fermeture (21) est mis en prise au moins partiellement avec la deuxième tubulure (100) et/ou le deuxième clapet de fermeture (121, 121') est mis en prise au moins partiellement avec la première tubulure (10).

10. Dispositif selon la revendication 9, **caractérisé en ce que** le premier clapet de fermeture (21) et/ou le deuxième clapet de fermeture (121, 121') présente, respectivement présentent, au moins une saillie (27, 127, 127') en forme d'anneau partiel, de préférence deux saillies en forme d'anneau partiel opposées, concentriquement par rapport au deuxième axe, devant venir en prise dans au moins un évidement (12, 102) en forme d'anneau partiel, ménagé dans la première tubulure (10) et/ou dans la deuxième tubulure (100).

11. Dispositif selon la revendication 9, **caractérisé en ce que** le premier clapet de fermeture (21) et/ou le deuxième clapet de fermeture (121, 121') présente, respectivement présentent, une gorge en forme d'anneau partiel, de préférence deux gorges en forme d'anneau partiel opposées, placées concentriquement par rapport au deuxième axe, devant venir en prise dans au moins un évidement en forme d'anneau partiel, ménagé dans la première tubulure et/ou dans la deuxième tubulure.

12. Dispositif selon l'une des revendications 4 à 11, **caractérisé en ce que** le deuxième axe s'étend sensiblement perpendiculairement par rapport au premier axe.

13. Dispositif selon l'une des revendications précédentes, **caractérisé en ce que** le premier clapet de fermeture (21) fait partie d'une soupape (21) passive, et le deuxième clapet de fermeture (121, 121') fait partie d'une soupape (120) active, de préférence le deuxième demi-axe (126) étant relié rigidement au deuxième arbre de sortie (316).

14. Dispositif selon l'une des revendications 5 à 13, **caractérisé par** un dispositif de nettoyage, par l'intermédiaire duquel, dans l'enceinte de nettoyage (400) ayant été fermée, lorsqu'on se trouve à la position de nettoyage, un produit de nettoyage fluide peut être introduit et évacué de celle-ci.
